# EUROPEAN PATENT APPLICATION

(11) **EP 3 789 361 A1**
(43) Date of publication of application: **10.03.2021**
(21) Application number: 20192926.2
(22) Date of filing: 26.08.2020
(51) Int. Cl.: C04B 28/02, C04B 18/24, C04B 111/00

(54) **JOINT SAND COMPOSITION**

(30) Priority: 09.09.2019 GB 201912981
(71) Applicant: Sønderberg, Frederiksen Jens, 5700 Svendborg (DK)
(72) Inventor: Sønderberg, Frederiksen Jens, 5700 Svendborg (DK)
(74) Representative: CSY London

(57) **Abstract**

A joint sand composition which comprises sand, a water-soluble polymer and an organic hydrocolloid. The joint sand is for filling gaps between pavers and provides a flexible composition when wet, which is resistant to rain erosion.

## Description

The present application relates to a sand composition. More particularly, the application relates to a joint sand composition. Joint sand compositions are used for filling gaps between building materials, such as paving slabs. Joint sands may be distinguished from mortars such as cement or lime which are intended to set to form a hard, rigid aggregate filler material. Joint sands are intended to retain flexibility, which allows for slight shifts in paving slabs over time, without causing cracking or disintegration of the joint.

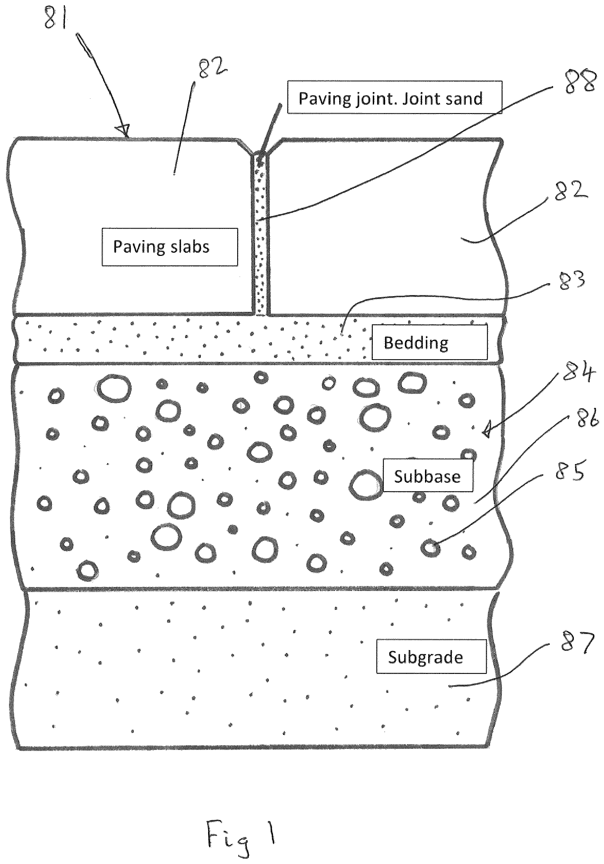

Figure 1 shows how paved areas around houses and gardens are commonly built. The paved area 81 is made up of paving slabs 82 which rest on a bedding of well graded sand 83 which sits on a sub-base 84. The sub-base is made from compacted mixtures of stone 85 and sand 86. The sub-base sits on top of a subgrade 87. This type of sub-base is utilized for areas which will be subject to light loads. This sub-base construction requires less expense, less purchased infill material and less skilled labour than hard or 'cast' sub-bases. Hard or 'cast' sub-bases might be used for surfaces which are intended to bear heavy loads, or surfaces with very high demands in terms of flatness and exact joint lines. The disadvantage of using a non-cast foundation for paved areas is that it requires a technically challenging finish. Over time irregularities of sizes and compaction of aggregate in the sub-base often lead to weak spots that eventually cause sinkage or cracking of the paving above. This has immediate visual effects caused by the irregularities in the overlying paved surface. Protruding or uneven paving slabs can cause safety problems. Another common problem is weed growth in damaged hard joints. This is exacerbated by irregularities in the joints. To alleviate these problems the gaps between paving slabs 82 may be filled with sand, known as joint sand 88. The joint sand is intended to add some structural stability to the paved surface, even though the underlying sub-base might be irregular.

Erosion of joint sand by direct rainwater action or run-off rainwater is a problem with existing joint sands. As joint sand is eroded from the gaps between pavers, structural integrity is reduced. Weed growth through the joint sand is also facilitated by erosion of the joint sand. Additives may be included in joint sand to reduce weed penetration through the joint sand. This is disclosed in the document WO2005/025316 A1. Additives have also been included to act as aggregate binder to attempt to reduce the amount of erosion. The document US 9,523,175 B2 discloses such compositions, which comprise psyllium. The psyllium is intended to seal the binder under dry conditions but is intended to re-disperse when wet, to provide some degree of self-healing to the joint sand.

Joint sands which contain additives generally need time to be cured before they are subjected to moving water, for example rain or run-off rainwater. The curing activates and settles the components. Curing involves wetting the joint sand once it is situated in a joint, and then allowing the joint sand to dry out. Even during this initial curing process (i.e. before the surface is ready to be subjected to rain or run-off water) erosion of the joint sand can be caused by unexpected rains.

Problems still remain with these compositions. For example, although the compositions disclosed in US 9,523,175 B2 require curing, the compositions are still vulnerable to erosion by rain or run-off water after a curing process has been carried out. Although, once cured, they provide a degree of re-dispersion of the composition when wet, the re-dispersion is incomplete. This creates a joint with poor self-healing properties. These compositions may also suffer from unsightly peels, a loose crumbling texture and/or micro cracks which form over time on the surface of the composition. The peels curl upwardly and (along with any micro cracks) open up the surface of the joint to erosion. It is thought that the lack of flexibility also increases over time, in part due to the action of sunlight and dissolution in run off waters of binders in the composition.

Joint sand mixtures are often dusty due to fine particle sizes present. This means that dust masks are commonly used during installation to reduce the risk of respiratory problems. A further common problem is that the fine dust which is generally richer in binder may soil the paver surface and can be difficult to remove. Joint sands are usually transported in sacks. During transport, the joint sand will be subject to vibrations, which can act to separate the joint sand mixture into fractions containing high proportions of fine particles and fractions containing high proportions of coarse particles. This leads to an inhomogeneous mixture which, if not re-mixed before use, may have sub-optimal properties.

It is amongst the objects of the invention to solve one or more of these problems.

In a first aspect, the invention provides a joint sand composition comprising;
sand,
a water-soluble polymer, and
an organic hydrocolloid.

The combination of the water-soluble polymer and the organic hydrocolloid provides enhanced resistance to water erosion immediately after installation and once the composition has been allowed to cure. After curing, and subjecting the composition to rainwater, the composition will absorb water to form a flexible 'putty-like' material yet still allow surplus water to pass to the sub-base. When the composition dries out after the rain has stopped it returns to a dry coherent form. The transition between the putty-like and dry forms is more complete when compared to compositions which lack the water-soluble polymer. The putty-like wet form of the composition is more flexible than compositions which lack the water-soluble polymer. The water-soluble polymer also helps to retain the hydrocolloid in place preventing its slow dissipation through water run-off.

The surface of the joint sand composition, once cured and subjected to rain water, forms a more stable surface than prior art compositions. Prior art compositions have tended (when wet) to have a relatively low viscosity, loosely bonded, upper surface which is quickly saturated with water as the hydrocolloids and other additives form a watertight lid. When raindrops impact this surface, it is therefore possible for the joint sand composition to splash out of the joint in which it is situated. The low viscosity, loosely bonded, surface material of the prior art compositions is also more prone to being washed away by flowing water. The incorporation of a water-soluble polymer into compositions according to the invention provides the more stable upper surface which allows water to pass to the sub-base. The surface region of the cured composition does not form micro cracks or peel in the same manner that the prior art compositions do over time. The surface therefore preserves its erosion resistance over longer periods than the prior art compositions.

The organic hydrocolloid preferably comprises psyllium. The organic hydrocolloid may be derived from a marine plant. For example, the organic hydrocolloid may be agar, an alginate, carrageenan or furcellaran. The organic hydrocolloid may be derived from a terrestrial plant. For example, the organic hydrocolloid may be guar, gum arabic, gum tragacanth, karaya gum, locust bean gum or pectin. The organic hydrocolloid may be a microbial polysaccharide. For example, the organic hydrocolloid may be dextran, gellan gum, rhamsan gum, welan gum or xanthan/xanthan gum. The organic hydrocolloid may be a polysaccharide derivative. For example, the organic hydrocolloid may be carboxymethylcellulose (CMC), methylhydroxypropyl cellulose (MHPC), hydroxypropyl cellulose (HPC), hydroxyethyl cellulose (HEC), propylene glycol alginate, hydroxypropyl guar (HP guar) or a modified starch. The hydrocolloid may be provided in combinations of the aforementioned organic hydrocolloids.

The organic hydrocolloid is preferably present in up to 4 wt%. The organic hydrocolloid is preferably present in at least 0.2 wt%.

The water-soluble polymer is preferably only partly soluble. Clearly, very soluble polymers will not be preferred as they could be fully dissolved and wash out of the composition. The skilled person is able to select appropriate polymers which have appropriate solubilities.

The water-soluble polymer may comprise polyvinyl alcohol, polyvinyl acrylate, polyacrylamide or alginic acid or a mixture thereof. Preferably the water-soluble polymer is swellable in water. Preferably the water-soluble polymer is a film forming polymer. The water-soluble polymer may comprise a mixture of polyvinyl alcohol and polyvinyl acrylate. The ratio of these components by weight may be about 1:1. Preferably the polyvinyl alcohol is 60-90%, and more preferably 70%, hydrolysed. Preferably the water-soluble polymer is 60-90%, and more preferably 70%, hydrolysed. These degrees of hydrolysis provide enhanced binding between the organic hydrocolloid, the sand particles, and the water-soluble polymer.

The joint sand composition may further comprise a liquid which has a vapour pressure that is lower than the vapour pressure of water. Preferably the vapour pressure is substantially lower than that of water. The liquid may be glycol, glycerol (glycerin) or another hydrophilic liquid which is liquid at ambient temperatures. The liquid may be an alcohol and may be a polyol. The liquid may comprise a proportion of higher molecular weight alcohols to regulate the viscosity of the composition. The liquid lightly bonds the components to prevent size separation of the various particles during transport of the composition. It also suppresses dust and reduces the risk of respiratory problems for users as well as preventing the soiling of pavers with fine dust. It has been found that it encourages water penetration into the full depth of the joint. This allows the joint sand to fully cure over its whole depth and removes stagnant water in the joint sand. This is in contrast to the prior art composition shown in figure 1 (discussed below) which forms a watertight gel in the top layer which blocks water access to the underlying sand. As the compositions allow water to pass through over their whole depth, erosion is reduced. The cured joint retains flexibility when wet over its entire depth. If the joint does become worn or damaged, this means that 'repair' (un-cured) joint sand which is added to the composition will be readily absorbed into the pre-existing (cured) joint sand.

The joint sand composition may in certain embodiments further comprise cement. This improves the bonding between the components and the structural rigidity of the joint. Preferably the cement is Portland cement.

The water-soluble polymer may constitute 0.1-5 wt% of the composition. More preferably the water-soluble polymer may constitute 0.1-1 wt% of the composition.

The water-soluble polymer may be granular and is preferably 18-25 mesh. This particle size leads to improved structural integrity over compositions which contain very fine particles.

The organic hydrocolloid may be granular and is preferably 10-20 mesh, and more preferably 16-20 mesh. These particle sizes lead to improved structural integrity over compositions which contain very fine particles. This is particularly the case when either of these size ranges are combined with a granular water-soluble polymer of 18-25 mesh.

In compositions in which the organic hydrocolloid is not xanthan gum, the composition may further comprise xanthan gum, preferably 0.05-0.5 wt% and more preferably 0.05-0.25 wt% xanthan gum and more preferably 0.1-0.2 wt%. It is thought that the presence of xanthan/xanthan gum leads to a faster curing ability, whilst maintaining the low erosion characteristics. This is particularly useful for repairing damaged (pre-cured) joint sands in a joint. Higher proportions of xanthan within the range stated seem to improve the fast curing yet low erosion characteristics.

Preferably the sand is quartz sand, which is preferably kiln-dried. Preferably the sand is size sorted sand and comprises ASTM sand 33 and/or ASTM sand 10, or a mixture thereof.

Preferably the pH of the composition is between 9.5 and 12 and is preferably between 10.5 and 11. Organic hydrocolloids may break down over time due to enzymatic or bacterial activity. Maintaining the pH of the composition within these ranges reduces the bacterial or enzymatic activity and thus reduces degradation. The pH can be adjusted by the incorporation of alkali metal ions into the composition, for example sodium, in the form of sodium silicate (Na₂O₃SiO₂), i.e. 'water glass'. This additive prevents weeds from getting established in joints and facilitating water penetration through the joints.

In a second aspect, the invention provides a method of finishing a paved area comprising the step of depositing joint sand according to the first aspect of the invention between adjacent paving slabs.

The method may further comprise the step of wetting the joint sand and then allowing the joint sand to dry, thereby curing the joint sand.

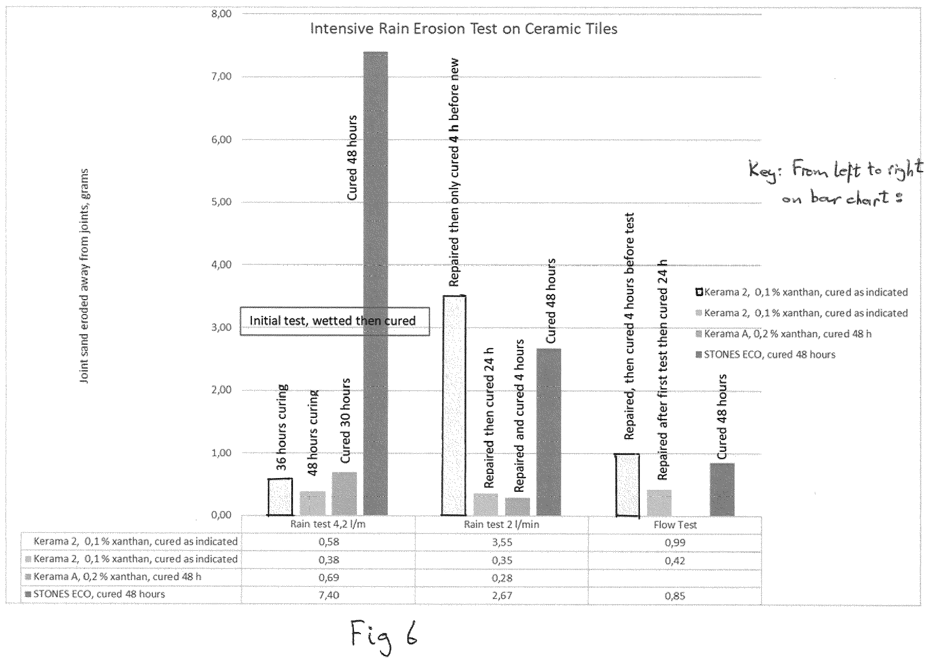

The method may include a repair step of adding further composition according to the first aspect of the invention to a damaged (pre-cured) composition according to the first aspect of the invention which damaged composition is located in a joint. Figure 6 shows that after a sufficient curing time, the repair joint sand is surprisingly well incorporated into the pre-existing cured joint sand. Preferably the curing time for compositions according to the invention is over 4 hours, preferably between 4 and 48 hours, and more preferably between 4 and 24 hours.

Non-limiting embodiments of the invention will now be described and compared with the prior art compositions, with reference to the figures of the drawings, in which:
Figure 1 shows a cross-section of a paved area which is built on a non-cast sub-base.
Figure 2 shows a wetted composition according to the prior art.
Figures 3a and 3b show experimental apparatus used to test embodiments of the invention.
Figure 4 shows a plan view of components of experimental apparatus used to test embodiments of the invention.
Figure 5 is a graph which compares the amount of joint sand eroded from non-cured prior art compositions with the amount of sand eroded from non-cured embodiments according to the invention.
Figure 6 shows the amount of joint sand eroded from cured compositions according to the invention.
Figure 7 shows the amount of joint sand eroded from a cured composition according to the invention compared to cured compositions according to the prior art.
Figure 8 shows the amount of joint sand eroded under natural rain for embodiments of the invention and prior art compositions.

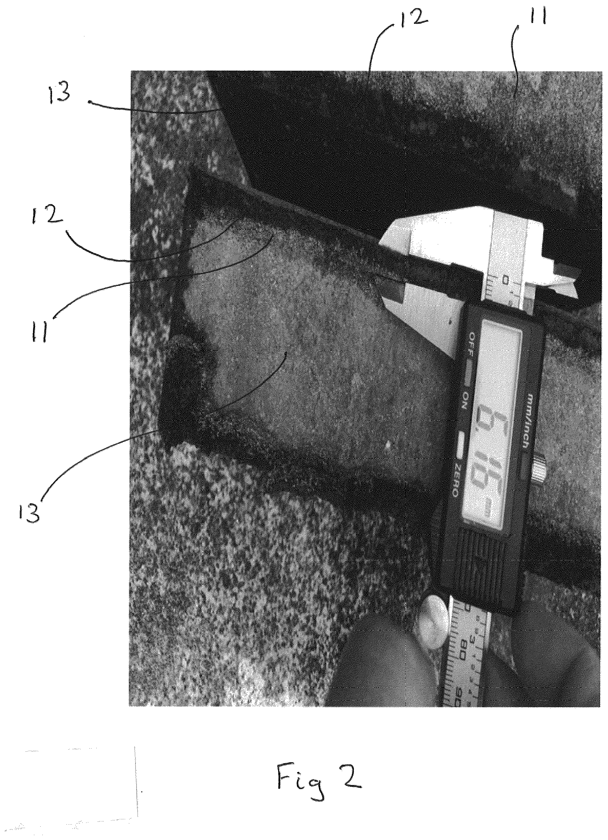

Figure 2 shows a composition according to sample B of US 9,523,175 B2 (see comparative composition 3 below for the exact composition) after the wetting step in a curing process. The composition has been deposited in the joint between two 6 cm thick paving slabs 13. In order to ensure complete and effective wetting, the joint sand was wetted intensively three times for 15 seconds, with 5 minute breaks in between wettings and then allowed to cure. The figure shows the end of one 6 cm paving slab which has been removed from the other paving slab and turned towards the camera. Some of the joint sand which was previously filling the joint between the slabs is adhered to the end of the paving slab. The rest of the joint sand has fallen away during the removal of the paving slab.

It has been found that that water which is applied from above only penetrates around 5-6 mm deep into the joint. This means that much of the joint sand 11 in the joint has not been properly wetted. The top of the joint has formed a hydrated layer 12 which has prevented proper water penetration into the joint. This means that much of the joint sand in the joint will not have been properly wetted and cannot properly cure. This means that the top wetted part of the joint will be saturated with water which can easily carry sand particles out of the joint and onto the pavers, either by rain drop splashing or by surface flow over the pavers during heavy rain.

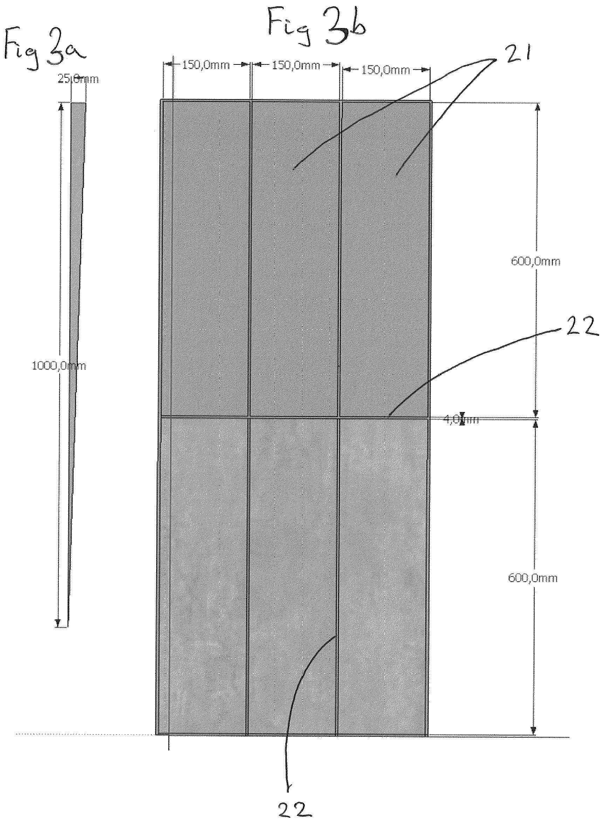

Figure 3 shows a test bed for testing the compositions according to the invention and comparing them to compositions according to the prior art. Figure 2a is a schematic showing the overall incline of the test bed from the horizontal. Figure 2b is a plan view of the test bed. Figure 2b shows the test bed of six ceramic tiles 21 arranged in a 2 by 3 array. The dimensions of the tiles are 60x15x2cm. The overall slope of the tiles as shown in figure 2a is fixed at 2.5% from the horizontal to provide a water flow. This slope is conventionally used in the art to ensure water is removed from the pavement. The surface area of the test bed is 0.54 m². The gaps 22 between the tiles are 4.0 mm wide and 2 cm deep. The joint sand to be tested is deposited into the gaps between the tiles. The test bed is vibrated or tapped to ensure that the joint sand is fully settled in the gaps, with minimal voids. Excess joint sand is then brushed off the surface.

Water can be deposited onto the test bed. It will flow down the inclined surface, over the tiles and the joint sand in the gaps and be collected in a receptacle placed under the lower end of the test bed. Water collected in the receptacle will contain any joint sand which has been eroded from the gaps. The eroded joint sand can be weighed to assess how much joint sand has been eroded for each test composition.

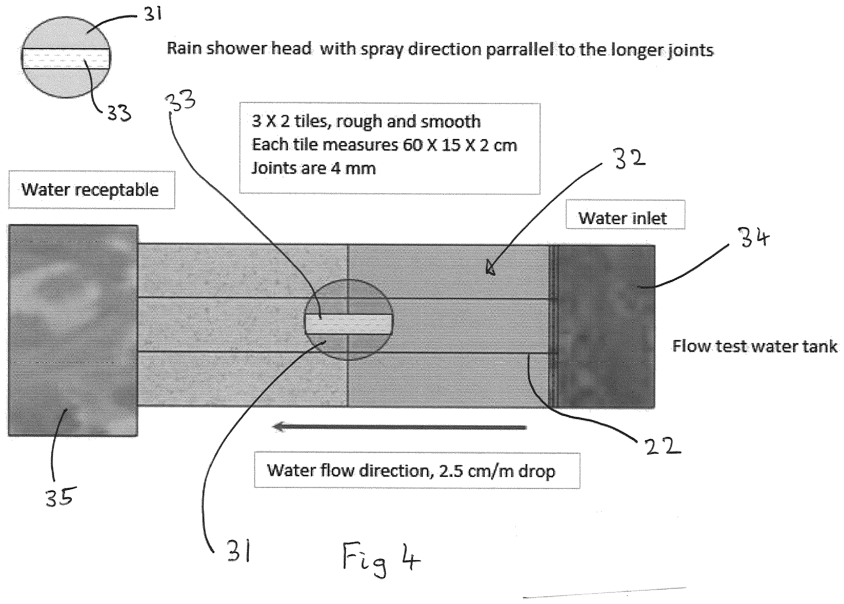

During testing, water was applied to the test bed in two standardized ways. Figure 4 shows apparatus for applying water to the test bed 32. In the first method, water is applied with a showerhead 31 to simulate rain. This is referred to as the 'rain' test in the following description and in the figures. The showerhead is placed centrally 1 m above the bed. Spray holes 33 in the showerhead are arranged parallel to the longer joints 22 only.

In the second method of applying water, the bed 32 is provided with a feed box 34 with 20 pcs 2 mm drilled holes from which water flow could be initiated directly on to the tiles parallel to the surface, i.e. without erosion caused by the impact of the droplets themselves. The feed box is provided at the raised end of the test bed. A standardized amount of water is allowed to flow out of the feed box, over the tiles and into the receptacle. This method is referred to as the 'flow test' in the following description and figures.

In either method of water application, water flows down the test bed in the direction of the arrow and is collected, along with any eroded joint sand in the receptacle 35.

### Test procedures

Each 'rain' test was performed over 5 minutes with a water flow of either about 4 litres per minute or about 2 litres per minute. These flow rates correspond to an extremely heavy rain shower, and between around 9 and 5.6 times what is termed 'violent' using UK Met Office terminology. The UK Met Office uses the following definitions: For showers: Slight = 0 to 2 mm/hr, Moderate = 2 to 10 mm/hr, Heavy = 10 to 50 mm/hr, Violent = more than 50 mm/hr. The tests were carried out at temperatures in the range of 15 to 28°C.

Simulated rain intensities (over the surface area of 0.54 m²) used in tests are calculated as follows:

| Duration | 4 litres/min | 2 litres/min |
|---|---|---|
| 5 minutes | 20 litres | 12.5 litres |
| 1 hour | 240 litres | 150 litres |
| litres/m² | 444 | 278 |
| mm/hour | 444 | 278 |

### Compositions

### Example 1

This composition is labelled as Kerama 2 in the figures and description below. The following components were provided and mixed until a homogeneous mixture was obtained.

| Component | Polyvinyl alcohol | Psyllium | Cement | Sand 33 | Sand 10 | Sodium glass | Xanthan | Glycerin/ Glycerol |
|---|---|---|---|---|---|---|---|---|
| wt% | 0.5 | 0.5 | 1 | 89.05 | 3.43 | 5.28 | 0.09 | 0.15 |

The polyvinylalcohol is PVA 17-88 (20 mesh) - CAS-No.: 25213-25-5. The psyllium is Psyllium Industrial Powder (KHAKHA POWDER), 0 - 1 mm, available from Rama Gum Industries (India) Limited, of Patan High way Road, Near G.I.D.C., Deesa-385535, (B.K.) Gujarat, India; http://www.ramagum.com/index.html.

The dust-suppressing liquid (0.15 wt%) is mainly glycerin/glycerol (> 80% glycerin/glycerol, or another polyol), with a small proportion of higher alcohols added for regulating the viscosity. The cement is Ordinary Portland Cement (OPC). Sand 10 and Sand 33 are well fractioned quartz sand. The xanthan is available from Dupont under the trade name Grindsted®.

### Example 2

This composition is referred to as Kerama A in the figures and description below. This composition is identical to example 1 (Kerama 2), except for the xanthan being in a wt% of 0.2% of the total composition rather than around 0.1 wt%. The extra wt% of xanthan takes the place of about 0.1 wt% of the sand in the example 1 (Kerama 2) composition.

### Comparative examples

Comparative composition 1 is referred to as 'reference sand without additives' in the figures and description below. This composition comprises only the sand components of Kerama 2, the ratio of Sand 33 : Sand 10 being 89.05 : 3.43.

Comparative composition 2 is referred to as 'DFS' in the figures and description below. It consists of;

| Component | Sand 33 | Sand 10 | Sodium glass | Xanthan | Glycerin |
|---|---|---|---|---|---|
| Ratio by weight | 89.05 | 3.43 | 5.28 | 0.09 | 0.15 |

Comparative composition 3 is referred to as 'STONES ECO FUGENSAND' or 'Stones Eco' in the figures and description below. This composition is available from STONES Gesellschaft für mineralische Baustoffe GmbH, of Warnowallee 31 c, D-18107, Rostock, Germany.

This composition is in accordance with sample B from example 1 of US 9,523,175. It comprises;
Aggregate: 96.6 wt%
Psyllium: 1.4 wt%
Potassium silicate (K₂O₃SiO₂), i.e. 'water glass': 1.0 wt%
Sodium Carbonate: 1.0 wt%

### Test results

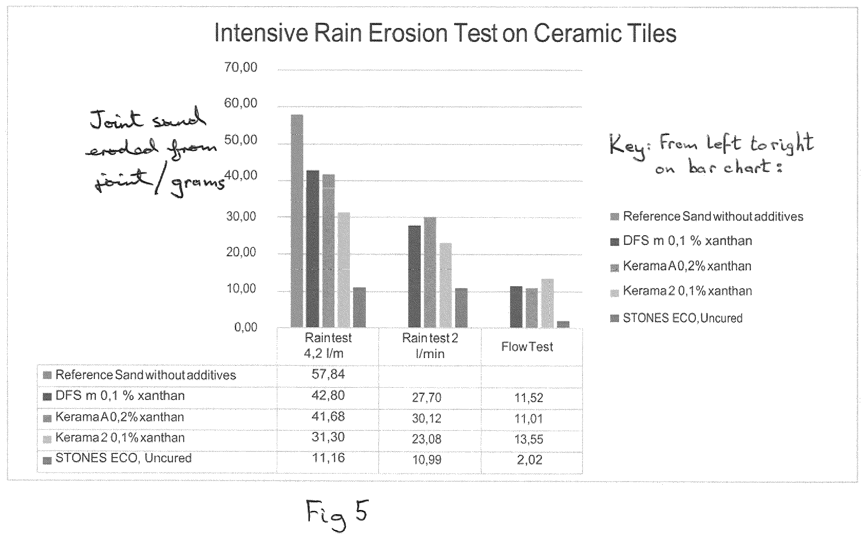

Figure 5 shows the results of the erosion tests using the procedures and apparatus described above. The joint sands tested were not cured prior to testing. It is clear that the prior art composition STONES ECO FUGENSAND suffers relatively little erosion in its pre-cured state when compared to compositions according to the invention. This is indicative of the fast stabilisation (by gel forming) of the psyllium and the fast formation of a water-impenetrable wetted upper layer in the STONES ECO FUGENSAND composition.

Figure 6 shows test results for compositions according to the invention after curing. The curing times are shown on the figure itself. The results are the opposite of those shown in Figure 5. After curing, the amount of sand eroded is substantially less than for the corresponding uncured compositions according to the invention which are shown in figure 5. The erosion is also substantially less than the uncured comparative compositions shown in figure 5. The cured joint sand according to the invention has reduced erosion from the rain tests of between 7 and 20 times compared to the prior art. The erosion of the cured Kerama 2 composition over the prior art in the surface flow erosion test is roughly halved.

On each of the graph bars curing times are noted. A 48 hour cured Stones Eco sand is compared with the invention cured 48 hours, 36 hours and only 4 hours. The 4 hours cured invention has a similar erosion as 48 hours cured Stones Eco, whereas the invention with longer curing time from 24 to 48 hours all have about 10 times less erosion than Stones Eco.

The Kerama A composition, which comprises 0.2 wt% xanthan shows a low erosion once it has been repaired, even under a low (4-hour) curing time. This is shown in the 2 litre/minute rain test. The presence of the higher proportion (0.2 wt%) of xanthan in Kerama A when compared to Kerama 2 is thought to lead to a faster curing ability, whilst maintaining the low erosion characteristics. This is particularly useful for repairing damaged (pre-cured) joint sands in a joint. Higher proportions of xanthan within the ranges stated herein are thought to improve the fast curing yet low erosion characteristics. This is useful for repairing pre-cured damaged joint sands which are already located in joints.

Figure 6 shows the effect of the curing process over time on the Kerama 2 composition. The '2 litres/minute rain test' and the 'flow test' show that low erosion is provided, even when repair joint sand is added to pre-existing joint sand in a joint. Figure 6 shows that after sufficient curing time, the extra 'added' repair joint sand is well incorporated into the pre-existing cured joint sand. This is thought to be due to the enhanced flexibility of the joint and the enhanced water penetration during the curing process (relative to the prior art).

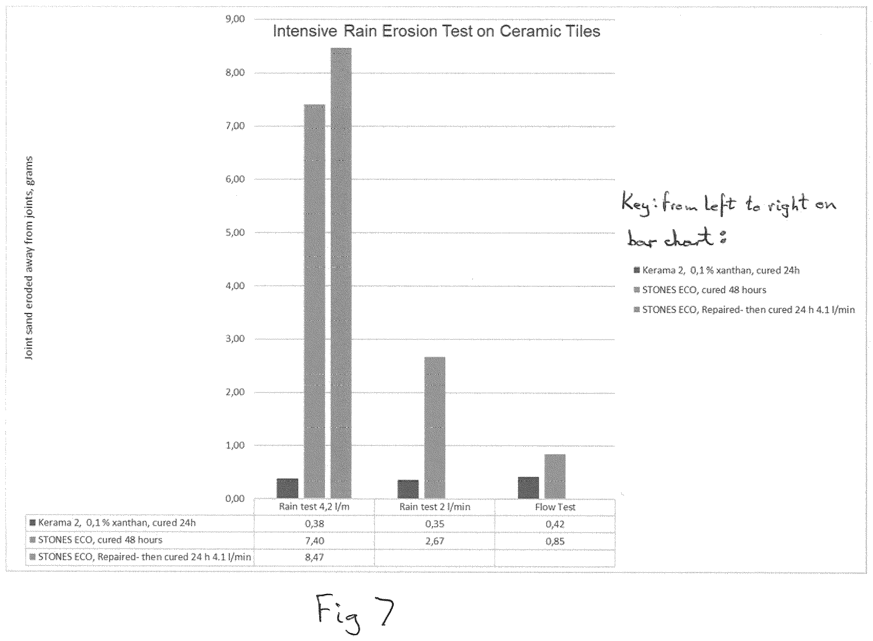

Figure 7 shows the low erosion provided by cured Kerama 2 relative to the Stones Eco (48 and 24 hours cured) comparative compositions.

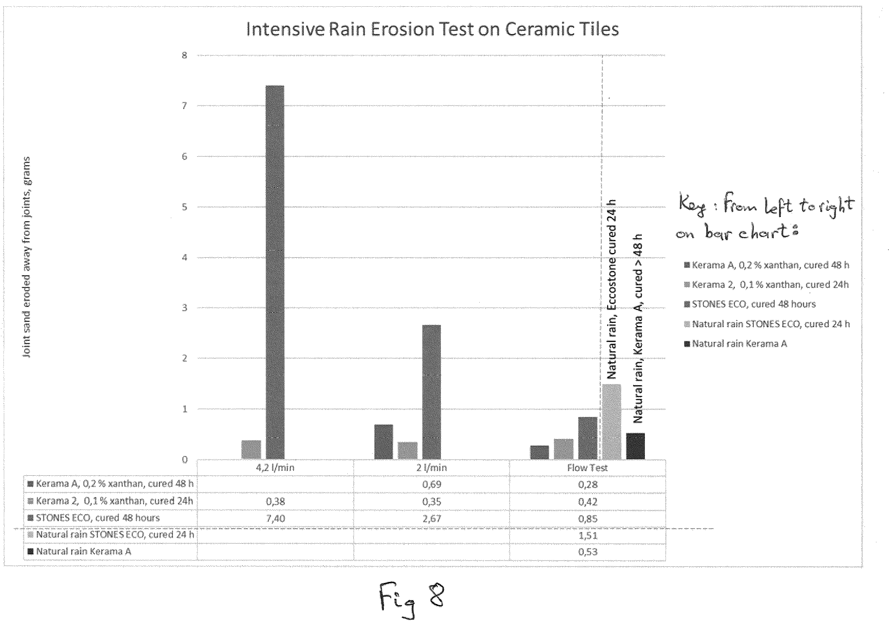

Figure 8 shows the erosion under the accelerated 'rain' and 'flow' tests described above. Kerama A and Kerama 2 compositions provide substantially lower erosion than the prior art Stones Eco composition, even with varying curing times. To the right of the dotted line on the graph, the results of tests conducted under natural rainfall conditions are shown. The same type of test bed which was used in the 'rain' and 'flow' tests was exposed to natural rainfall. The data from these tests is shown under the dotted line in the corresponding table. The natural rainfall for the Stones Eco test was around 14 mm in 30 minutes (heavy rain). The natural rainfall for the Kerama A test was around 15 mm in 30 minutes (heavy rain). In the case of natural rainfall, the Kerama A composition has around 3 times better erosion resistance than the Stones Eco prior art composition.

## Claims

1. A joint sand composition comprising;
sand,
a water-soluble polymer, and
an organic hydrocolloid.

2. A joint sand composition according to claim 1 wherein the organic hydrocolloid comprises psyllium.

3. A joint sand composition according to either preceding claim wherein the water-soluble polymer comprises polyvinyl alcohol, polyvinyl acrylate, polyacrylamide or alginic acid or a mixture thereof.

4. A joint sand composition according to any preceding claim further comprising a liquid which has a vapour pressure that is lower than the vapour pressure of water.

5. A joint sand composition according to claim 4 wherein the liquid is glycol, glycerol or another hydrophilic liquid.

6. A joint sand composition according to any preceding claim further comprising cement.

7. A joint sand composition according to any preceding claim in which the water-soluble polymer constitutes 0.1-5 wt% of the composition.

8. A joint sand composition according to any preceding claim wherein the water-soluble polymer is granular, and is preferably 18-25 mesh.

9. A joint sand composition according to any preceding claim wherein the organic hydrocolloid is granular, and is preferably 10-20 mesh.

10. A joint sand composition according to any preceding claim, wherein the organic hydrocolloid is not xanthan gum, further comprising xanthan gum, and preferably 0.05-0.5 wt% xanthan gum.

11. A joint sand composition according to any preceding claim wherein the sand is quartz sand.

12. A joint sand composition according to any preceding claim wherein the sand is size sorted sand comprising ASTM sand 33, ASTM sand 10, or a mixture thereof.

13. A joint sand composition according to any preceding claim wherein the pH of the composition is between 9.5 and 12, and is preferably between 10.5 and 11.

14. A method of finishing a paved area comprising the step of depositing joint sand according to any of claims 1-13 between adjacent paving slabs.

15. The method of claim 14 further comprising the step of wetting the joint sand and then allowing the joint sand to dry, thereby curing the joint sand.
